# EUROPEAN PATENT APPLICATION

(11) **EP 3 616 768 A1**
(43) Date of publication of application: **04.03.2020**
(21) Application number: 18790604.5
(22) Date of filing: 24.04.2018
(51) Int. Cl.: B01D 19/00, B01D 24/00, B01D 29/00, B01D 29/07, B01D 35/02, E02F 9/00, F15B 1/26, B01D 46/00, B01D 29/58

(54) **STRAINER**

(30) Priority: 27.04.2017 JP 2017088570
(71) Applicant: Yamashin-Filter Corp., Yokohama-shi, Kanagawa 231-0062 (JP)
(72) Inventor: ISHIZUKA, Makoto, Yokohama-shi Kanagawa 235-0033 (JP)
(74) Representative: Winter, Brandl, Fürniss, Hübner, Röss, Kaiser, Polte - Partnerschaft mbB
(86) International application number: PCT/JP2018/016639
(87) International publication number: WO 2018/199102

(57) **Abstract**

Provided is a strainer capable of removing bubbles contained in a liquid and preventing the removed bubbles from mixing with the liquid again. The strainer includes a second filtration section having a substantially cylindrical shape with both ends connected, formed by folding a thin plate-shaped filter medium in a pleated shape, which is provided inside a first filtration section having a substantially cylindrical shape with both ends connected, formed by folding the thin plate-shaped filter medium in a pleated shape, without coming into contact with the first filtration section. An outer cylinder having a substantially cylindrical shape having a height higher than that of each of the first filtration section and the second filtration section is also provided outside the first filtration section, without coming into contact with the first filtration section. In addition, an upper plate, having a substantially discoid shape covering an upper side of each of the first filtration section, the second filtration section, and the outer cylinder, is formed with a plurality of first air vent holes between the outer cylinder and the first filtration section and formed with a plurality of second air vent holes between the first filtration section and the second filtration section, in a plan view.

## Description

### Technical Field

The present invention relates to a strainer.

### Background Art

Patent Document 1 discloses a hydraulic fluid tank device of a construction machine, having a return filter and a suction filter that are coaxially coupled. The suction filter has an upper end surface separated from a lower end surface of the return filter by a predetermined distance L.

### Citation List

### Patent Document

Patent Document 1: JP 2000-309945 A

### Summary of Invention

### Technical Problem

In a work machine (e.g., a hydraulic device), a hydraulic fluid (liquid) returned from a hydraulic circuit to a tank typically contains many bubbles. The invention described in Patent Document 1 only prevents a hydraulic fluid containing bubbles from directly flowing from the return filter to the suction filter (corresponding to a strainer), and thus when the hydraulic fluid containing bubbles flows into the suction filter, the bubbles pass through the suction filter along with the hydraulic fluid.

Thus, in the invention described in Patent Document 1, a hydraulic fluid containing bubbles may be pumped through the suction filter to a pump, which may cause defects in the pump by sucking bubbles.

The present invention is made in light of the above-mentioned circumstances, and an object of the present invention is to provide a strainer capable of removing bubbles contained in a liquid and preventing the removed bubbles from mixing with the liquid again.

### Solution to Problem

To solve the problems described above, a strainer according to the present invention is a strainer provided in a tank storing a liquid, for example, the strainer including: a first filtration section and a second filtration section formed by folding a thin plate-shaped filter medium in a pleated shape, each having a substantially cylindrical shape with both ends connected; an outer cylinder having a substantially cylindrical shape provided outside the first filtration section and the second filtration section; an upper plate having a substantially discoid shape, covering an upper side of the first filtration section, the second filtration section, and the outer cylinder; and a lower plate having a substantially discoid shape, covering a lower side of the first filtration section and the second filtration section, wherein the second filtration section is provided inside the first filtration section without coming into contact with the first filtration section, the outer cylinder is provided outside the first filtration section without coming into contact with the first filtration section, the outer cylinder has a height higher than that of each of the first filtration section and the second filtration section, the lower plate is formed with an outflow port inside the second filtration section in a plan view, and the upper plate is formed with a plurality of first air vent holes between the outer cylinder and the first filtration section and formed with a plurality of second air vent holes between the first filtration section and the second filtration section, in a plan view.

According to the strainer according to the present invention, the second filtration section having a substantially cylindrical shape with both ends connected, formed by folding the thin plate-shaped filter medium in a pleated shape, is provided inside the first filtration section having a substantially cylindrical shape with both ends connected, formed by folding the thin plate-shaped filter medium in a pleated shape, without coming into contact with the first filtration section. The outer cylinder having a substantially cylindrical shape having a height higher than that of each of the first filtration section and the second filtration section is also provided outside the first filtration section without coming into contact with the first filtration section. This structure does not allow a liquid flowing in the tank to directly come into contact with the first filtration section. Then, the liquid having passed through the plurality of filtration sections is discharged from the strainer, so bubbles can be removed from the liquid.

The upper plate, having a substantially discoid shape covering an upper side of each of the first filtration section, the second filtration section, and the outer cylinder, is formed with a plurality of first air vent holes between the outer cylinder and the first filtration and formed with a plurality of second air vent holes between the first filtration section and the second filtration section, in a plan view. This structure allows bubbles to be discharged from the strainer separately from the liquid. Thus, the removed bubbles can be prevented from mixing with the liquid again.

The strainer may be configured as follows: a cover member is provided above the upper plate to form a sealed space between the cover member and the upper plate. The cover member is formed with a third air vent hole larger than each of the first air vent holes and each of the second air vent holes, the cover member is provided with a turn plate in a turnable manner, and when air inside the sealed space pushes up the turn plate, the turn plate turns from a closed position allowing the third air vent hole to be closed to an open position allowing the third air vent hole to be opened. The sealed space covered by the upper plate and the cover is filled with a liquid, so air is prevented from flowing back through the first air vent holes and the second air vent holes. When the turn plate is turned using air, the air can be discharged from the sealed space covered with the upper plate and the cover.

The thin plate-shaped filter medium may be a metal wire mesh with thin wires knitted into a mesh. The thin plate-shaped filter medium enables bubbles to be removed by the first filtration section and the second filtration section while a filtration area achieving an appropriate flow rate is maintained.

### Advantageous Effects of Invention

According to the present invention, bubbles contained in a liquid can be removed, and the removed bubbles can be prevented from mixing with the liquid again.

### Brief Description of Drawings

FIG. 1 is a diagram illustrating an overview of a hydraulic fluid tank 100 provided therein with a suction strainer 1 according to an embodiment of the present invention.
FIG. 2 is a perspective view illustrating appearance of the suction strainer 1.
FIG. 3 is a cross-sectional view of the suction strainer 1 taken along plane C (refer to the dashed-double dotted line in FIG. 2).
FIG. 4 is an explanatory diagram of an upper plate 15 and is an enlarged view of a portion of FIG. 3.
FIG. 5 is a cross-sectional view of the upper plate 15 and is an enlarged view of the vicinity of an air vent hole 15g.
FIG. 6 is a graph illustrating effect of removing bubbles when a metal mesh pleated filter medium is used.

### Description of Embodiments

Hereinafter, embodiments of the present invention will be described in detail with reference to the drawings. While in the embodiments described below, an example of a suction strainer provided inside a hydraulic fluid tank is described, the strainer of the present invention is not limited to the suction strainer provided inside the hydraulic fluid tank. While the suction strainer according to the embodiments below is used to filter a hydraulic fluid, a fluid to be filtered by the strainer of the present invention is not limited to the hydraulic fluid.

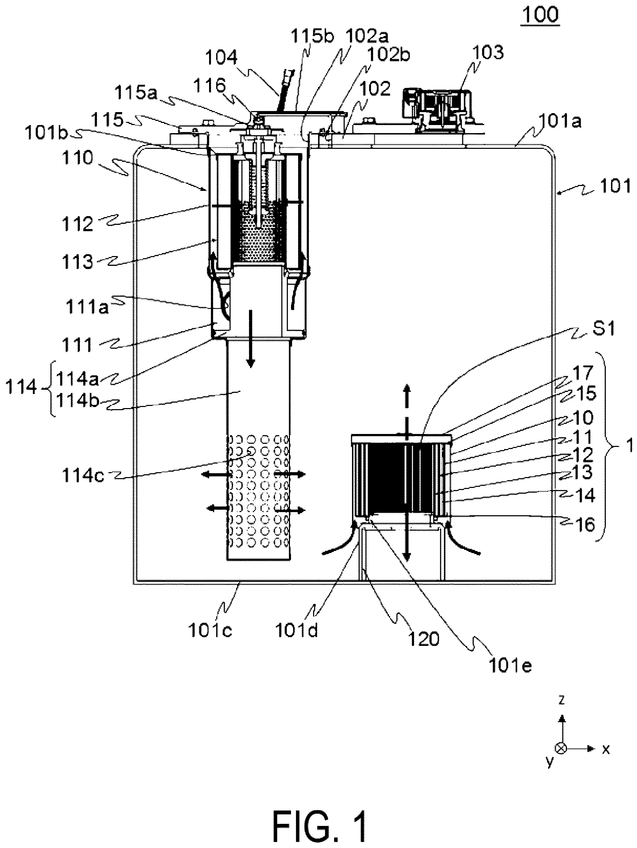

FIG. 1 is a diagram illustrating an overview of a hydraulic fluid tank 100 provided therein with a suction strainer 1 according to an embodiment of the present invention. FIG. 1 includes a perspective view of main parts of the hydraulic fluid tank 100 and a cross-sectional view of a part of the main parts. FIG. 1 does not have hatching indicating a cross section.

The hydraulic fluid tank 100 is installed in a work machine that is not illustrated (e.g., a hydraulic device) and is a tank provided inside a hydraulic circuit of a hydraulic fluid to be supplied to the hydraulic device to store the hydraulic fluid. In the hydraulic circuit, the hydraulic fluid passes through the hydraulic device to be introduced into the hydraulic fluid tank 100.

The hydraulic fluid tank 100 includes a tank body 101 having a box shape, for example, and the tank body 101 is hollow. The tank body 101 is mainly provided inside with a return filter 110 and the suction strainer 1.

The tank body 101 is provided on its upper surface 101a with an attachment part 102 having a substantially plate-shape for attaching a member.

The upper surface 101a of the tank body 101 is formed with an opening 101b into which the return filter 110 is inserted. The attachment part 102 is formed with an opening 102a into which the return filter 110 is inserted.

The attachment part 102 is provided on its upper surface with a lid 115 (described below in detail) of the return filter 110. The return filter 110 is provided inside the tank body 101 through the openings 101b and 102a.

The attachment part 102 is also provided with an air breather 103. The air breather 103 filters air ingress into the tank body 101 in association with vertical movement of an oil surface S to prevent dust or the like from entering a hydraulic fluid. The attachment part 102 and the air breather 103 are not indispensable.

The return filter 110 includes an inflow section 111 having a bottom and a substantially cylindrical shape through which a hydraulic fluid flows into the return filter 110. The inflow section 111 is formed in its side surface with a through-hole 111a through which a hydraulic fluid passes, and the through-hole 111a is provided with a flow inlet pipe (not illustrated) passing through the tank body 101. The hydraulic fluid having passed through the flow inlet pipe and the through-hole 111a flows into the inflow section 111, and then flows into a space between a filter case 112 and a filter element 113 through an opening of the inflow section 111 on its upper side.

The filter case 112 is a substantially cylindrical shape member covered at both ends, and an opening at an upper end (the end on +z side) is covered with the lid 115. The filter case 112 is provided inside with the filter element 113. The filter element 113 has a filter medium configured to filter a hydraulic fluid.

The filtered hydraulic fluid having passed through the filter medium flows from a hollow portion of the filter element 113 to an outflow section 114. The outflow section 114 is a member that communicatively connects the hollow portion of the filter element 113 and the inside of the tank body 101. The filtered hydraulic fluid having flowed into the outflow section 114 flows into the inside of the tank body 101 through a plurality of holes 114a formed in a side surface of the outflow section 114. As described above, the hydraulic fluid is filtered by the return filter 110 and is stored in the tank body 101.

The tank body 101 is formed in a vicinity of its lower end portion (a bottom surface 101c of the tank body 101 in the present embodiment) with an outflow port 101d that allows a hydraulic fluid inside the tank body 101 to flow out to a hydraulic pump (not illustrated). The outflow port 101d is provided protruding upward (inside the tank body 101).

The outflow port 101d is fitted with a suction pipe 120 inserted, leading to a suction port of the hydraulic pump (not illustrated). A portion, of the suction pipe 120, provided outside the tank body 101 is not illustrated.

To prevent foreign matter from entering the suction pipe, the outflow port 101d is provided with the suction strainer 1. In the present embodiment, an insertion section 101e having a substantially cylindrical shape that is narrower than the outflow port 101d is formed above the outflow port 101d (inside the tank body 101). When the insertion section 101e is inserted onto the suction strainer 1, the outflow port 101d is provided with the suction strainer 1. The hydraulic fluid stored in the hydraulic fluid tank 100 is suctioned into the hydraulic pump (not illustrated) to flow out to the suction pipe 120 through the suction strainer 1 and is supplied again to the hydraulic device.

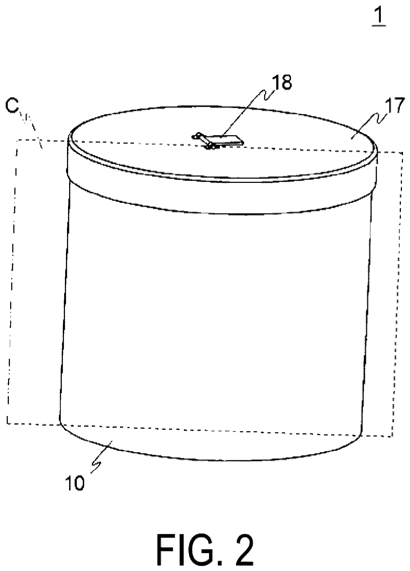

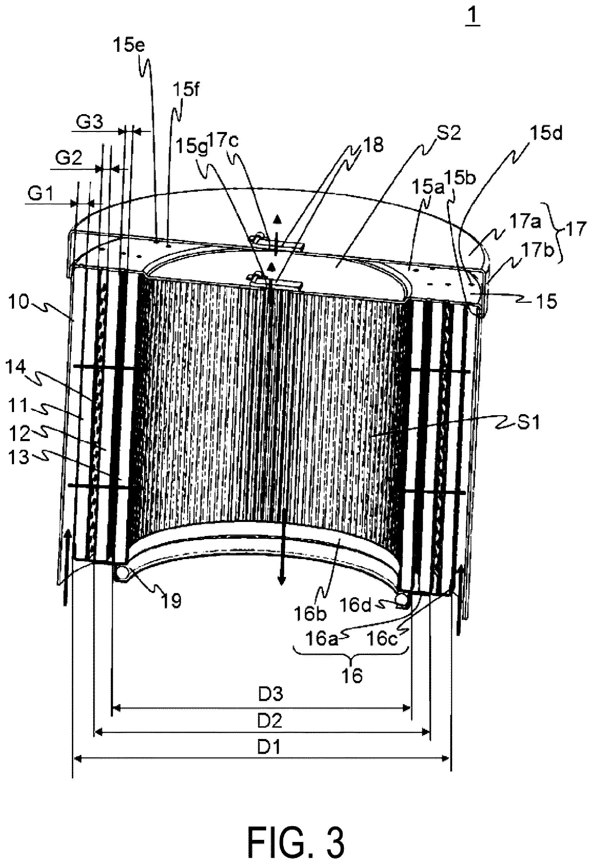

FIG. 2 is a perspective view illustrating appearance of the suction strainer 1, and FIG. 3 is a cross-sectional view of the suction strainer 1 taken along plane C (refer to the dashed-double dotted line in FIG. 2). The suction strainer 1 mainly includes an outer cylinder 10, filtration sections 11, 12, and 13, an inner cylinder 14, an upper plate 15, a lower plate 16, a cover 17, and a turn plate 18.

The filtration sections 11, 12, and 13 are each configured to filter a hydraulic fluid. The filtration sections 11, 12, and 13 are each a substantially cylindrical shape member in which a thin plate-shaped filter medium is folded in a pleated shape with both ends connected. As the thin plate-shaped filter medium, a fine metal (e.g. stainless steel) wire mesh with thin wires knitted into a mesh is used. Hereinafter, the filter medium in which the fine metal wire mesh with fine wires knitted into a mesh is folded in a pleated shape and connected at both ends forming a substantially cylindrical shape, used in the filtration sections 11, 12, and 13, is referred to as a metal mesh pleated filter medium.

The filtration sections 11, 12, and 13 each have a different diameter. The filtration section 12 has a diameter D12 smaller than a diameter D11 of the filtration section 11. The filtration section 13 has a diameter D13 smaller than the diameter D11 of the filtration section 11 and the diameter D12 of the filtration section 12. The filtration section 12 is provided inside the filtration section 11 without coming into contact with the filtration section 11. The filtration section 13 is provided inside the filtration section 12 without coming into contact with the filtration section 12.

The outer cylinder 10 is a substantially cylindrical shape member provided outside the filtration sections 11, 12, and 13, the outer cylinder 10 being made of a material having high corrosion resistance. In the present embodiment, the outer cylinder 10 is provided outside the filtration section 11 without coming into contact with the filtration section 11. A gap G1 is formed between the outer cylinder 10 and the filtration section 11, a gap G2 is formed between the filtration section 11 and the filtration section 12, and a gap G3 is formed between the filtration section 12 and the filtration section 13.

The filtration sections 11, 12, and 13 each have a substantially same height. The outer cylinder 10 has a height higher than the height of each of the filtration sections 11, 12, and 13.

The inner cylinder 14 is a substantially cylindrical hollow member formed using a material having high corrosion resistance. The inner cylinder 14 is provided inside the filtration section 11 coming into contact with the filtration section 11. The inner cylinder 14 is formed substantially in its entire region with holes through which a hydraulic fluid passes.

While in the present embodiment, the inner cylinder 14 is provided only inside the filtration section 11, an inner cylinder (having a configuration similar to that of the inner cylinder 14) may also be provided inside each of the filtration sections 12 and 13.

The upper plate 15 is a substantially discoid shape member covering an upper side of each of the outer cylinder 10, the filtration sections 11, 12, and 13, and the inner cylinder 14, the upper plate 15 being formed using a material having high corrosion resistance. The upper plate 15 has a body portion 15a having a substantially discoid shape and a protrusion 15b formed on the periphery of the body portion 15a.

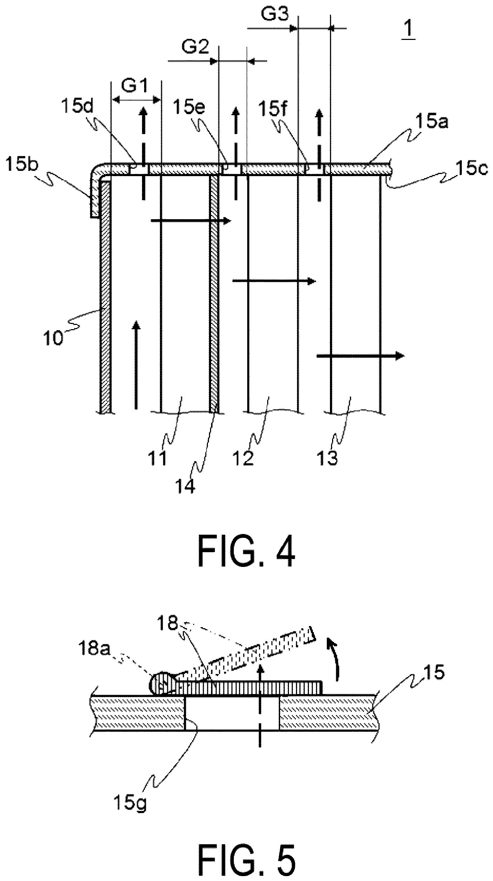

FIG. 4 is an explanatory diagram of the upper plate 15 and is an enlarged view of a portion of FIG. 3. The body portion 15a has a lower surface 15c being in contact with an upper end surface of each of the filtration sections 11, 12, and 13, and an upper end surface of the inner cylinder 14.

The protrusion 15b is formed in a substantially cylindrical shape protruding downward from the body portion 15a. The protrusion 15b is configured to cover an outer peripheral surface of the outer cylinder 10. This structure allows the upper plate 15 to cover the upper side of each of the outer cylinder 10, the filtration sections 11, 12, and 13, and the inner cylinder 14.

The body portion 15a is formed with a plurality of air vent holes 15d between the outer cylinder 10 and the filtration section 11 in a plan view (when viewed from z-direction), with a plurality of air vent holes 15e between the filtration section 11 and the filtration section 12, and with a plurality of air vent holes 15f between the filtration section 12 and the filtration section 13.

The description now returns to FIG. 3. The body portion 15a is formed with an air vent hole 15g inward of the filtration section 13 in a plan view. The air vent hole 15g is larger than the air vent holes 15d, 15e, and 15f.

FIG. 5 is a cross-sectional view of the upper plate 15 and is an enlarged view of the vicinity of the air vent hole 15g. The upper plate 15 is provided, on its upper surface (surface on +z side), with the turn plate 18 covering the air vent hole 15g. The turn plate 18 turns around a turning shaft 18a, between a closed position allowing the air vent hole 15g to be closed and an open position allowing the air vent hole 15g to be opened (refer to the dashed-double dotted line in FIG. 5).

The air vent hole 15g is configured to extract air (initial air) present in a space inside the filtration section 13 (hereinafter referred to as a space S1) when the suction strainer 1 is installed inside the tank body 101. When the turn plate 18 is pushed up by initial air, the air vent hole 15g is opened to discharge the initial air through the air vent hole 15g.

The description now returns to FIG. 3. The lower plate 16 is a member having a substantially discoid shape configured to cover a lower side of each of the filtration sections 11, 12, and 13, the lower plate 16 being formed using a material having high corrosion resistance. The lower plate 16 includes a plate-like portion 16a in contact with a lower end surface of each of the filtration sections 11, 12, and 13; an inner peripheral portion 16b having a substantially cylindrical shape in contact with an inner circumferential surface of the filtration section 13; and an outer peripheral portion 16c having a substantially cylindrical shape in contact with an outer peripheral surface of the filtration section 11. The inner peripheral portion 16b is a hollow portion serving as an outflow port formed inside the filtration section 13 in a plan view.

The plate-like portion 16a is provided on its lower surface (on -z side) with a protrusion 16d having a substantially L-shape in cross-sectional view, protruding downward. Between the plate-like portion 16a and the protrusion 16d, an elastic member 19 such as an O-ring is provided.

The insertion section 101e (refer to FIG. 1) is inserted into the inner peripheral portion 16b. When the insertion portion 101e is inserted into the inner peripheral portion 16b, the elastic member 19 and an outer peripheral surface of the insertion portion 101e come into contact with each other to prevent a hydraulic fluid from leaking from between the lower plate 16 and the insertion portion 101e.

The cover 17 is a substantially cylindrical shape member with an upper end surface covered, the cover 17 being formed using a material having high corrosion resistance. The cover 17 is provided over the upper plate 15.

The cover 17 has a plate-like portion 17a having a substantially same shape as the upper plate 15 in a plan view, and a cylindrical portion 17b protruding downward from the periphery of the plate-like portion 17a and covering an outer peripheral surface of the protrusion 15b. This structure allows the cover 17 to cover an upper portion of the upper plate 15, forming a space S2 between the upper plate 15 and the cover 17.

The plate-like portion 17a is formed with an air vent hole 17c larger than the air vent holes 15d, 15e, and 15f. The air vent hole 17c has a size substantially same as that of the air vent hole 15g.

The plate-like portion 17a is provided, on its upper surface (surface on +z side), with the turn plate 18 covering the air vent hole 17c. The turn plate 18 turns around the turning shaft 18a (not illustrated in FIG. 3), between a closed position allowing the air vent hole 17c to be closed and an open position allowing the air vent hole 17c to be opened.

Next, functions of the suction strainer 1 configured as described above will be described with reference to FIGS. 1, 3, and 4. In FIGS. 1, 3, and 4, thick solid arrows each indicate a flow of a hydraulic fluid and thick dashed arrows each indicate a flow of air.

As illustrated in FIG. 1, a hydraulic fluid filtered by the return filter 110 flows transversely through the plurality of holes 114a into the tank body 101. The outer cylinder 10 is provided around the suction strainer 1, and the outer cylinder 10 is provided with no hole. Thus, the hydraulic fluid having flowed transversely into the tank body 101 does not directly collide with the filtration section 11.

The filtration sections 11, 12, and 13 each have a substantially same height, and the outer cylinder 10 has a height higher than that of the filtration sections 11, 12, and 13. The suction strainer 1 is covered on its upper side with the upper plate 15 and the cover 17. Thus, a hydraulic fluid stored inside the tank body 101 flows from a lower side of the suction strainer 1 into a space between the outer cylinder 10 and the filtration section 11.

As illustrated in FIG. 3, first, the hydraulic fluid flows into the space between the outer cylinder 10 and the filtration section 11. Then, the hydraulic fluid passes through the filtration section 11, the inner cylinder 14, the filtration section 12, and the filtration section 13 in order and flows into the space S1.

In the suction strainer 1, the metal mesh pleated filter medium is used for each of the filtration sections 11, 12, and 13. Thus, when the hydraulic fluid passes through the filtration sections 11, 12, and 13, bubbles (air) contained in the hydraulic fluid are removed.

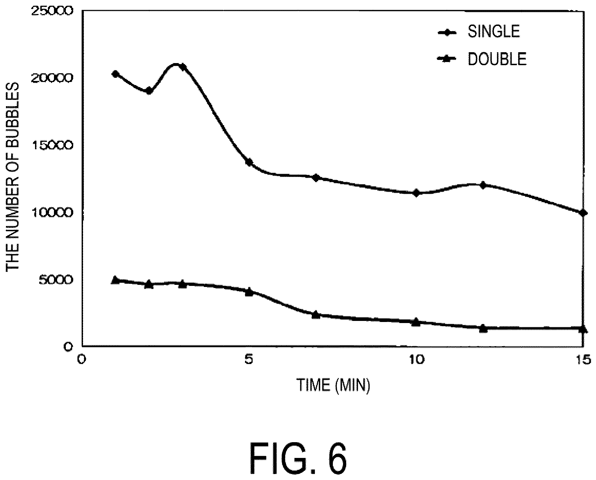

FIG. 6 is a graph illustrating effect of removing bubbles when the metal mesh pleated filter medium is used. For the filter medium, a wire mesh of 150-mesh is used. Here, a mesh is a unit representing a size of the mesh, and the 150-mesh indicates 150 meshes are aligned in 1 inch (25.4 mm). The 150-mesh has a wire diameter d of 0.06 mm, an aperture of substantially 0.1 mm, which is an indicator indicating a size of the mesh, being calculated as follows: aperture A = (25.4 / mesh) - wire diameter d), and an aperture ratio of substantially 41%, which is calculated as follows: aperture A / (aperture A + wire diameter d)²) × 100).

FIG. 6 shows a relationship ("single" in FIG. 6) between the number of bubbles and time when a hydraulic fluid passes through once a metal mesh pleated filter medium using a wire mesh of 150-mesh, and a relationship ("double" in FIG. 6) between the number of bubbles and time when a hydraulic fluid passes through twice the metal mesh pleated filter medium using the wire mesh of 150-mesh. In the case of the double, the number of bubbles considerably decreases compared to the case of the single.

While FIG. 6 does not show the number of bubbles when a hydraulic fluid does not pass through the metal mesh pleated filter medium, the number of bubbles decreases by substantially 50% when a hydraulic fluid passes through the metal mesh pleated filter medium using the wire mesh of 150-mesh (bubble removal efficiency is substantially 50%). Thus, in the case of the double, the bubble removal efficiency is 25% (= 0.5 × 0.5).

The suction strainer 1 uses three metal mesh pleated filter media in the respective filtration sections 11, 12, and 13. Accordingly, the bubble removal efficiency is 12.5% (= 0.5 × 0.5 × 0.5), and thus the bubble removal efficiency is 87.5% (= 100-12.5).

The bubbles removed in the filtration sections 11, 12, and 13 need to be discharged from the suction strainer 1 so as not to mix with a hydraulic fluid. As illustrated in FIG. 4, the air vent holes 15d, 15e, and 15f are formed in the upper plate 15. Thus, bubbles removed in the filtration section 11 rise upward in the space between the outer cylinder 10 and the filtration section 11 and are discharged through the air vent hole 15d to the space S2 (refer to FIG. 3), bubbles removed in the filtration section 12 rise upward in the space between the filtration section 11 and the filtration section 12 and are discharged through the air vent hole 15e to the space S2, and bubbles removed in the filtration section 13 rise upward in the space between the filtration section 12 and the filtration section 13, and is discharged through the air vent hole 15f into the space S2.

As illustrated in FIG. 3, air discharged from the air vent holes 15d, 15e, and 15f; and initial air discharged from the air vent hole 15g accumulate in the space S2. When the amount of air equal to or more than a predetermined amount accumulates in the space S2, the air pushes up the turn plate 18, and then the air is discharged from the space S2 to the tank body 101 through the air vent hole 17c.

The space S2 is a sealed space covered with the upper plate 15 and the cover 17, so the space S2 is essentially filled with a hydraulic fluid. Thus, air does not flow back from the air vent holes 15d, 15e, and 15f to below the upper plate 15.

Meanwhile, a hydraulic fluid passes through the filtration sections 11, 12, and 13 before flowing into the space S1 so that bubbles are removed. The hydraulic fluid from which the bubbles have been removed is discharged from the space S1 through a hollow portion of the insertion section 101e and the suction pipe 120 to the outside of the tank body 101, as illustrated in FIG. 1. As described above, the hydraulic fluid from which bubbles have been removed is discharged to the outside of the tank body 101 in a different path than a discharge path of air. Thus, the removed bubbles can be prevented from mixing with the hydraulic fluid again.

According to the present embodiment, while the outer cylinder 10 prevents a hydraulic fluid flowing out of the return filter 110 from directly colliding with the filtration section 11, the hydraulic fluid having passed through the plurality of metal mesh pleated filter media (here, the three filtration sections 11, 12, and 13) is discharged from the suction strainer 1, and thus bubbles can be removed from the hydraulic fluid. This configuration can prevent defects caused when a pump sucks air; and defects in which a component is damaged when bubbles burst in a hydraulic circuit to temporarily increase temperature and pressure of a hydraulic fluid to a significant degree.

In addition, according to the present embodiment, the metal mesh pleated filter medium is used to remove bubbles, so the bubbles can be removed while a filtration area (surface area) is increased. In particular, pressure loss is likely to increase when a hydraulic fluid passes through a plurality of filter media as in the present embodiment. In contrast, when all of a plurality of filtration sections is composed of respective metal mesh pleated filter media, bubbles can be effectively removed with low pressure loss.

While in the present embodiment, the suction strainer 1 includes three metal mesh pleated filter media (filtration sections 11, 12, and 13), the number of metal mesh pleated filter media is not limited to three. The suction strainer 1 includes at least two or more metal mesh pleated filter medium. However, as the number of metal mesh pleated filter media through which a hydraulic fluid passes increases, bubble removal efficiency increases accordingly. Thus, it is desirable to provide three or more metal mesh pleated filter media.

While in the present embodiment, the filtration sections 11, 12, and 13 are each a metal mesh pleated filter medium using a wire mesh of 150-mesh, the form of each of the filtration sections 11, 12, and 13 is not limited to this. For example, a metal mesh pleated filter medium using a wire mesh other than that of 150-mesh may be used for each of filtration sections 11, 12, and 13. In addition, for example, a filter medium having a sheet-like shape with holes formed throughout the filter medium, such as a filter paper using synthetic resin, paper, or the like, is used as a thin plate-shaped filter medium, and the thin plate-shaped filter medium is folded in a pleated shape and connected at both ends to form a substantially cylindrical shape and then may be used for each of the filtration sections 11, 12, and 13. However, to achieve a filtration area allowing an appropriate flow velocity (approximately 0.003 m /second in this case), it is desirable that a metal mesh pleated filter medium using a wire mesh is used for each of the filtration sections 11, 12, and 13.

Embodiments of the invention have been described in detail with reference to the drawings. However, specific configurations are not limited to the embodiments, and changes in the design or the like are also included within a scope which does not depart from the gist of the invention. For example, the above examples have been explained in detail in order to facilitate understanding of the present invention and are not necessarily limited to examples provided with the entirety of the configuration described above. In addition, the configuration of an embodiment may be partially replaced with the configuration of a different embodiment, or the configuration of the different embodiment may be added to, deleted from, or replaced with the configuration of the embodiment.

Further, the term "substantially" in the present invention is not to be understood as merely being strictly the same and is a concept that includes errors and modifications to an extent that does not result in loss in identity. For example, the term "substantially orthogonal" is not limited to being strictly orthogonal and is a concept that includes errors of several degrees, for example. Further, simple expressions such as orthogonal, parallel, and identical are not to be understood as merely being strictly orthogonal, parallel, identical, and the like and include being substantially parallel, substantially orthogonal, substantially identical, and the like.

Furthermore, the meaning of the term "vicinity" in the present invention includes a range of regions (which can be determined as desired) near a position serving as a reference. For example, the term "a vicinity of an end" refers to a range of regions near the end and is a concept indicating that the end may or may not be included.

### Reference Signs List

1 Suction strainer
10 Outer cylinder
11, 12, and 13 Filtration section
14 Inner cylinder
15 Upper plate
15a Body portion
15b Protrusion
15c Lower surface
15d, 15e, 15f, 15g Air vent hole
16 Lower plate
16a Plate-like portion
16b Inner peripheral portion
16c Outer peripheral portion
16d Protrusion
17 Cover
17a Plate-like portion
17b Cylindrical portion
17c Air vent hole
18 Turn plate
18a Turning shaft
19 Elastic member
100 Hydraulic fluid tank
101 Tank body
101a Upper surface
101b Opening
101c Bottom surface
101d Outflow port
101e Insertion section
102 Attachment part
102a Opening
103 Air breather
110 Return filter
111 Inflow section
111a Through-hole
112 Filter case
113 Filter element
114 Outflow section
114a Hole
115 Lid
120 Suction pipe

## Claims

1. A strainer provided in a tank storing a liquid, the strainer comprising:
a first filtration section and a second filtration section formed by folding a thin plate-shaped filter medium in a pleated shape, each having a substantially cylindrical shape with both ends connected;
an outer cylinder having a substantially cylindrical shape disposed outside the first filtration section and the second filtration section;
an upper plate having a substantially discoid shape, covering an upper side of the first filtration section, the second filtration section, and the outer cylinder; and
a lower plate having a substantially discoid shape, covering a lower side of the first filter section and the second filter section,
wherein the second filtration section is disposed inside the first filtration section without coming into contact with the first filtration section,
the outer cylinder is disposed outside the first filtration section without coming into contact with the first filtration section, the outer cylinder has a height higher than that of each of the first filtration section and the second filtration section,
the lower plate is formed with an outflow port inside the second filtration section in a plan view, and
the upper plate is formed with a plurality of first air vent holes between the outer cylinder and the first filtration section and formed with a plurality of second air vent holes between the first filtration section and the second filtration section, in a plan view.

2. The strainer according to claim 1 further comprising:
a cover member disposed above the upper plate to form a sealed space between the cover member and the upper plate,
wherein the cover member is formed with a third air vent hole larger than each of the first air vent holes and each of the second air vent holes,
the cover member comprises a turn plate in a turnable manner, and
when air inside the sealed space pushes up the turn plate, the turn plate turns from a closed position allowing the third air vent hole to be closed to an open position allowing the third air vent hole to be opened.

3. The strainer according to claim 1 or 2, wherein
the thin plate-shaped filter medium is a metal wire mesh with thin wires knitted into a mesh.
